# EUROPÄISCHE PATENTANMELDUNG

(11) **EP 1 918 051 A1**
(43) Veröffentlichungstag der Anmeldung: **07.05.2008**
(21) Anmeldenummer: 07020780.8
(22) Anmeldetag: 24.10.2007
(51) Int. Cl.: B23B 47/26, B23B 49/02, B23B 51/00, B25H 1/00, B25B 27/18

(54) **Vorrichtung zum Einbringen einer Bohrung in ein Werkstück und Verwendung der Vorrichtung zur Erneuerung defekter Gewinde**

(30) Priorität: 03.11.2006 DE 102006052278
(71) Anmelder: Rheinmetall Landsysteme GmbH, 24107 Kiel (DE)
(72) Erfinder: Reker, Alfred, 24159 Kiel (DE)
(74) Vertreter: Dietrich, Barbara

(57) **Zusammenfassung**

Die Erfindung betrifft eine Vorrichtung (1) zum Einbringen mindestens einer Bohrung in ein Werkstück (2), welches im Bereich der einzubringenden Bohrung mindestens zwei vorhandene Gewindebohrungen (4 bis 6) aufweist sowie eine Verwendung der Vorrichtung zur Erneuerung defekter Gewinde.

Um zu erreichen, dass mit der Vorrichtung (1) auf einfache und kostengünstige Weise Bohrungen Vorort sehr genau in ein Werkstück (2) eingebracht werden können, schlägt die Erfindung vor, zum Einbringen einer Bohrung in das Werkstück (2) eine Bohrschablone (7) zu verwenden, welche an dem Werkstück (2) positionsgenau befestigbar ist und die als Grundplatte für eine an ihr befestigte und zum Einbringen der Bohrung erforderliche Bohrmaschine (10) dient. Dabei werden zum positionsgenauen Befestigen der Bohrschablone (7) an dem Werkstück (2) im Bereich der neu einzubringenden Bohrung bereits vorhandene Gewindebohrungen (4 bis 6) verwendet.

## Beschreibung

Die Erfindung betrifft eine Vorrichtung zum Einbringen mindestens einer Bohrung in ein Werkstück, welches im Bereich der einzubringenden Bohrung mindestens zwei vorhandene Gewindebohrungen aufweist. Die Erfindung bezieht sich ferner auf eine Verwendung der Vorrichtung zur Erneuerung defekter Gewinde oder zur Änderung der Gewindegröße vorhandener Gewinde in Werkstücken.

Insbesondere bei Flanschen der Laufwerke von Kettenfahrzeugen kommt es immer wieder vor, dass defekte Gewinde erneuert werden müssen oder die Gewindegröße geändert werden muss. In der Praxis ist es in diesen Fällen üblich, entweder mit Hilfe von Magnetbohrmaschinen Vorort das vorhandene Gewinde auszubohren und entsprechende Reparatur-Gewindesätze in diese Bohrung einzusetzen oder das defekte Fahrzeug zur Reparatur in ein entsprechendes Werk zu transportieren, um dann dort die erforderlichen Reparaturarbeiten durchzuführen.

Im Falle einer Vorort-Reparatur hat es sich als nachteilig erwiesen, dass der Magnetbohrer häufig nicht genau positioniert werden kann und die Bohrungen nicht senkrecht zur Flanschfläche eingebracht werden. Ein Transport des gesamten Kettenfahrzeuges in ein entsprechendes Werk zur Reparatur ist hingegen außerordentlich zeit- und kostenaufwendig.

Der Erfindung liegt daher die Aufgabe zugrunde, eine Vorrichtung anzugeben, mittels welcher auf einfache und kostengünstige Weise Bohrungen Vorort sehr genau in ein Werkstück eingebracht werden können. Insbesondere soll diese Vorrichtung auch zur Instandsetzung defekter Gewindebohrungen oder zur Änderung vorhandener Gewindebohrungen, beispielsweise an Flanschflächen für die Befestigung von Laufwerksteilen von Kettenfahrzeugen Vorort, verwendbar sein, wobei die konstruktiven Vorgaben, wie die Form- und Lagetoleranzen der Gewindebohrungen, sicher eingehalten werden müssen.

Diese Aufgabe wird erfindungsgemäß hinsichtlich der Vorrichtung durch die Merkmale des Anspruchs 1 und hinsichtlich der Verwendung durch die Merkmale des Anspruchs 5 gelöst. Weitere, besonders vorteilhafte Ausgestaltungen der Erfindung offenbaren die Unteransprüche.

Die Erfindung beruht im wesentlichen auf dem Gedanken, zum Einbringen einer Bohrung in das Werkstück eine Bohrschablone zu verwenden, welche an dem Werkstück positionsgenau befestigbar ist und die als Grundplatte für eine an ihr befestigte und zum Einbringen der Bohrung erforderliche Bohrmaschine dient.

Zum positionsgenauen Befestigen der Bohrschablone an dem Werkstück werden im Bereich der neu einzubringenden Bohrung bereits vorhandene Gewindebohrungen herangezogen. In diese werden durch entsprechende Bohrungen der Grundplatte Befestigungsschrauben eingeschraubt, wobei die Bohrungen in der Grundplatte in Bezug auf die einzubringende Gewindebohrung die gleichen Positionen aufweisen wie die Gewindebohrungen in Bezug auf die neu einzubringende Bohrung in dem Werkstück (d.h. das Bohrbild der Bohrschablone entspricht genau dem Bohrbild des Werkstückes (beispielsweise also einer Flanschplatte)).

Sofern die neu einzubringende Bohrung als Kernbohrung für ein anschließend in diese Bohrung zu schneidendes Innengewinde dient, ist bei der erfindungsgemäßen Vorrichtung vorgesehen, dass in die Schablonenbohrung nach Entfernung der Bohrbuchse eine Zentrierhülse einsetzbar ist, durch welche ein Gewindebohrer zum Schneiden des Gewindes positionsgenau einführbar ist.

Um die Vorrichtung auf einfache Weise transportieren und bei der Befestigung der Vorrichtung an dem Werkstück halten zu können, ist mit der Grundplatte vorzugsweise eine Trageinrichtung verbunden.

Weitere Einzelheiten und Vorteile der Erfindung ergeben sich aus den folgenden, anhand von Figuren erläuterten Ausführungsbeispielen.

Es zeigen:
- Fig. 1: eine perspektivische Ansicht einer erfindungsgemäßen Bohrvorrichtung;
- Fig. 2: eine perspektivische Ansicht der in Fig.1 dargestellten Vorrichtung unmittelbar vor dem Befestigen der Vorrichtung an einem Flansch, in dem eine vorhandene Gewindebohrung erneuert werden soll, und

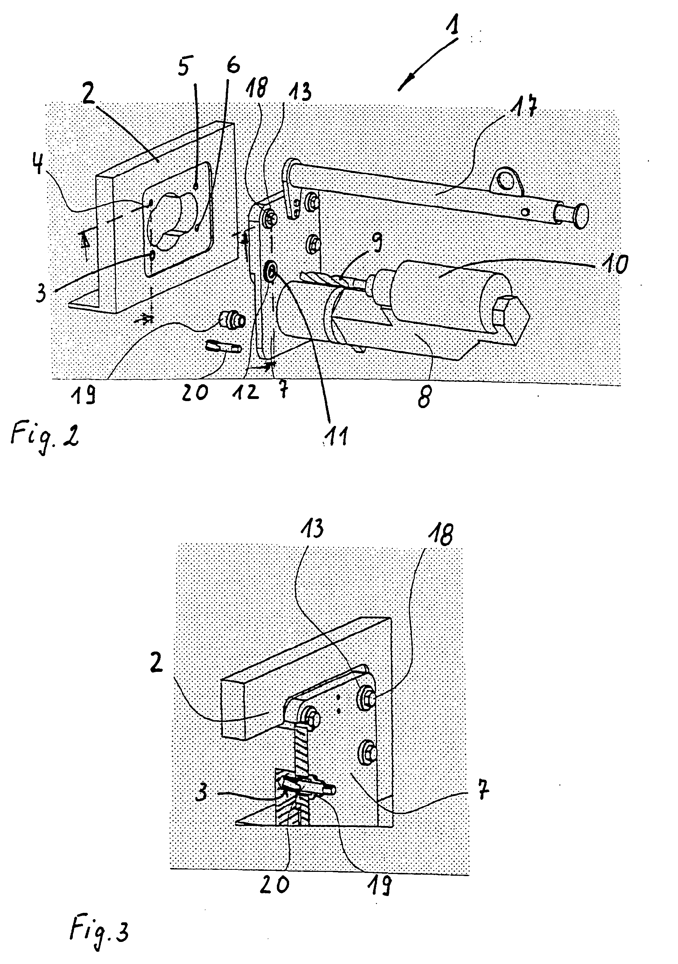

- Fig. 3: einen vergrößerten Ausschnitt der in Fig.2 dargestellten Anordnung nach Entfernen der für das Einbringen einer Kernbohrung benötigten Bohrmaschine und dem Einführen eines Gewindebohrers in die Schablonenbohrung der entsprechenden Bohrschablone.

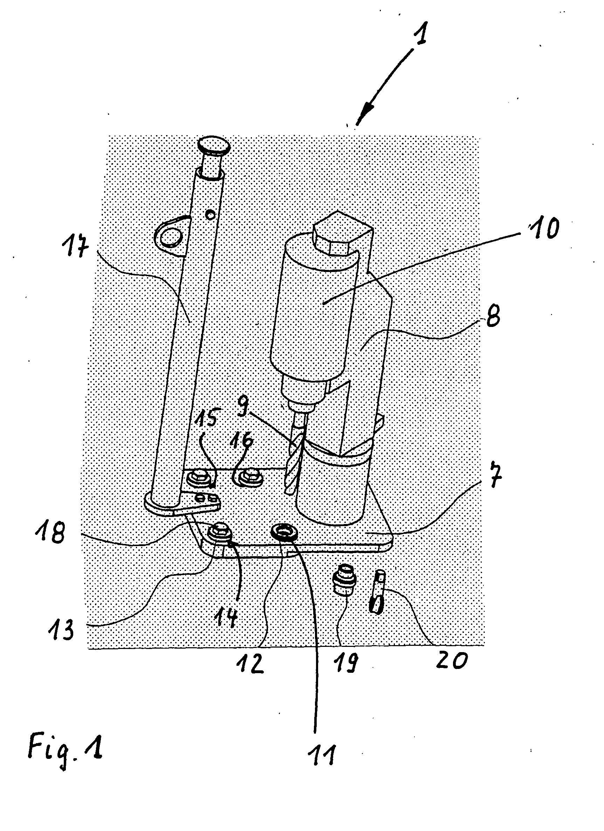

In den Fig. 1 und 2 ist mit 1 eine erfindungsgemäße Vorrichtung zum Einbringen einer Gewindebohrung in eine Flanschplatte 2 bezeichnet. Die Flanschplatte 2 weist vier Gewindebohrungen 3 bis 6 auf, wobei die mit 3 bezeichnete Gewindebohrung erneuert werden muss. Die drei weiteren Gewindebohrungen 4-6 werden zur genauen Positionierung und Fixierung der Vorrichtung 1 beim Einbringen der neuen Gewindebohrung 3 herangezogen.

Die Vorrichtung 1 umfasst eine Grundplatte 7 mit einer daran befestigten Halteeinrichtung 8 für eine mit einem Bohrer 9 versehene Magnetbohrmaschine 10. Diese dient vor dem Einbringen der neuen Gewindebohrung zum Vorbohren eines Kernloches in die Flanschplatte 2 (hier also einem Ausbohren der vorhandenen Gewindebohrung 3).

Die Grundplatte 7 ist als Bohrschablone ausgebildet, wobei die für die Einbringung des Kernloches in die Flanschplatte 2 vorgesehene Schablonenbohrung 11 mit einer Bohrbuchse 12 versehen ist, deren Innendurchmesser dem Außendurchmesser des Bohrers 9 entspricht.

Außerdem weist die Grundplatte 7 drei mit Zentrierbuchsen 13 versehene Bohrungen 14 bis 16 auf, deren Positionen zueinander und in Bezug auf die Schablonenbohrung 11 den gegenseitigen Positionen der in der Flanschplatte 2 vorhandenen Gewindebohrungen 4 bis 6 und der einzubringenden neuen Gewindebohrung (die hinsichtlich ihrer Lage der Gewindebohrung 3 entspricht) entsprechen, so dass das Bohrbild der Bohrschablone 7 genau dem Bohrbild der Flanschplatte 2 entspricht.

Um die Kernbohrung in die Flanschplatte 2 einzubringen, wird zunächst die Magnetbohrmaschine 10 mit dem Bohrer 9 mittels entsprechender Einstelleinrichtungen der Halteeinrichtung 8 exakt über der Bohrbuchse 12 der Schablonenbohrung 11 positioniert und arretiert. Anschließend wird dann die Vorrichtung 1 mit Hilfe einer Trageeinrichtung 17 an die im vorliegenden Fall senkrechte Flanschplatte 2 (Fig. 2) befördert, und die Grundplatte 7 wird mit Hilfe von drei Befestigungsschrauben 18 an der Flanschplatte 2 befestigt, wobei die Befestigungsschrauben 18 durch die in die Bohrungen 14 bis 16 eingesetzten Zentrierbuchsen 13 gesteckt und in die Gewindebohrungen 4 bis 6 der Flanschplatte 2 eingeschraubt werden.

Nach der sich anschließenden Kernlochbohrung mittels der Magnetbohrmaschine 10 wird diese wieder entfernt und die in der Schablonenbohrung 11 befindliche Bohrbuchse 12 durch eine Zentrierbuchse 19 ersetzt.

Nun kann ein Gewindebohrer 20 durch die in der Schablonenbohrung 11 befindliche Zentrierbuchse 19 geführt und das neue Innengewinde in das vorgebohrte Kernloch eingeschnitten werden.

Selbstverständlich ist die Erfindung nicht auf das vorstehend beschriebene Ausführungsbeispiel beschränkt. So muss es sich bei dem Werkstück beispielsweise nicht zwangsläufig um eine Flanschplatte handeln. Ferner können auch mehr als nur eine Schablonenbohrung vorgesehen sein.

### Bezugszeichenliste

- 1: Vorrichtung
- 2: Flanschplatte, Werkstück
- 3-6: Gewindebohrungen
- 7: Grundplatte, Bohrschablone
- 8: Halteeinrichtung
- 9: Bohrer
- 10: Bohrmaschine, Magnetbohrmaschine
- 11: Schablonenbohrung
- 12: Bohrbuchse
- 13: Zentrierbuchse
- 14-16: Bohrungen
- 17: Trageeinrichtung
- 18: Befestigungsschraube
- 19: Zentrierbuchse
- 20: Gewindebohrer

## Patentansprüche

1. Vorrichtung zum Einbringen mindestens einer Bohrung in ein Werkstück (2), welches im Bereich der einzubringenden Bohrung mindestens zwei vorhandene Gewindebohrungen (4 bis 6) aufweist, mit den Merkmalen:
a) die Vorrichtung (1) umfasst eine Grundplatte (7) mit einer Halteeinrichtung (8) für eine mit einem Bohrer (9) versehene und hinsichtlich ihrer Lage veränderbaren Bohrmaschine (10) zum Bohren der in das Werkstück (2) einzubringenden Bohrung;
b) die Grundplatte (7) ist als Bohrschablone ausgebildet, wobei die für die Einbringung der Bohrung in das Werkstück (2) vorgesehene Schablonenbohrung (11) mit einer Bohrbuchse (12) versehbar ist;
c) die Grundplatte (7) weist mindestens zwei zusätzliche mit Zentrierbuchsen (13) versehbare Bohrungen (14 bis 16) auf, deren Positionen zueinander und in Bezug auf die Schablonenbohrung (11) den Positionen der in dem Werkstück (2) vorhandenen Gewindebohrungen (4 bis 6) zueinander und in Bezug auf die einzubringende Bohrung entsprechen, so dass nach Befestigung der Grundplatte (7) an dem Werkstück (2) mittels durch die Zentrierbuchsen (13) hindurchgeführten und in die Gewindebohrungen (4 bis 6) eingeschraubten Befestigungsschrauben (18) eine positionsrichtige Bohrung mittels des durch die Schablonenbohrung (11) hindurchgeführten Bohrers (9) der Bohrmaschine (10) in dem Werkstück (2) durchführbar ist.

2. Vorrichtung nach Anspruch 1, **dadurch gekennzeichnet, dass** in die Schablonenbohrung (11) nach Entfernung der Bohrbuchse (12) eine Zentrierbuchse (19) einsetzbar ist, durch welche ein Gewindebohrer (20) zum Schneiden eines Innengewindes in die als Kernloch dienende neue Bohrung des Werkstückes (2) vornehmbar ist.

3. Vorrichtung nach Anspruch 1, **dadurch gekennzeichnet, dass** es sich bei der Bohrmaschine (10) um eine Magnetbohrmaschine handelt.

4. Vorrichtung nach einem der Ansprüche 1 bis 3, **dadurch gekennzeichnet, dass** mit der Grundplatte (7) eine Trageeinrichtung (17) verbunden ist.

5. Verwendung der Vorrichtung zur Erneuerung defekter Gewinde oder zur Änderung der Gewindegröße vorhandener Gewinde in Werkstücken.
